# EUROPEAN PATENT SPECIFICATION

(11) **EP 0 335 455 B1**
(45) Date of publication and mention of the grant of the patent: **10.02.1993**
(21) Application number: 89200747.7
(22) Date of filing: 23.03.1989
(51) Int. Cl.: A01B 49/04

(54) **A combination of a drill and a soil cultivating machine**
Kombinierte Drill- und Bodenbearbeitungsmaschine
Machine combinée pour semer et cultiver la terre

(30) Priority: 30.03.1988 NL 8800800
(43) Date of publication of application: 04.10.1989
(73) Proprietor: C. van der Lely N.V., NL-3155 PD Maasland (NL)
(72) Inventor: Bom, Cornelis Johannes Gerardus, Rozenburg (NL)
(74) Representative: Mulder, Herman

(56) References cited:
- EP-A- 0 198 563
- EP-A- 0 199 406
- US-A- 3 265 137

## Description

The invention relates to a combination of a soil cultivating machine and a drill, which combination comprises a frame and two soil cultivating units, whereby the frame is mainly disposed between the said two soil cultivating units and is provided with connecting means for connecting the frame with the said two soil cultivating units to a lifting device at the front side of a tractor, the combination further comprises a third soil cultivating unit provided with means for mounting this unit to the rear lifting device of the tractor.

Such a combination is known from EP-A-0 199 406; in the machine described in this European patent application the soil cultivating units are formed by plows, while furthermore near the plow at the rear side of the tractor a rotary harrow with a seed drill is provided, which rotary harrow cooperates in a specific manner with the adjacent plow body of the plow at the rear side of the tractor. Although the known machine makes it possible to plow, to harrow and to seed in a single working operation, the working width of the rotary harrow and the seed drill is rather limited. To create a large working width the combination as described in the opening paragraph is, according to the invention, characterized in that each soil cultivating unit comprises a power driven tillage machine, such as a rotary harrow, and in that a first seed drill is provided at the front side of the tractor, which seed drill is common for the said two soil cultivating units, and a second seed drill at the rear side of the tractor, which second seed drill is combined with the third cultivating unit.

In a special embodiment according to the invention the soil cultivating-seed drill unit at the rear side of the tractor can have a working width which is equal to the width of the strip present between the soil cultivating units located at the front side of the tractor.

For a better understanding of the present invention and to show how the same may be carried into effect, reference will now be made, by way of example, to the accompanying drawings, in which:
Figure 1 is a schematic plan view of a construction according to the invention;
Figure 2 is, to an enlarged scale, a plan view of a soil cultivating unit arranged near the front side of a tractor;

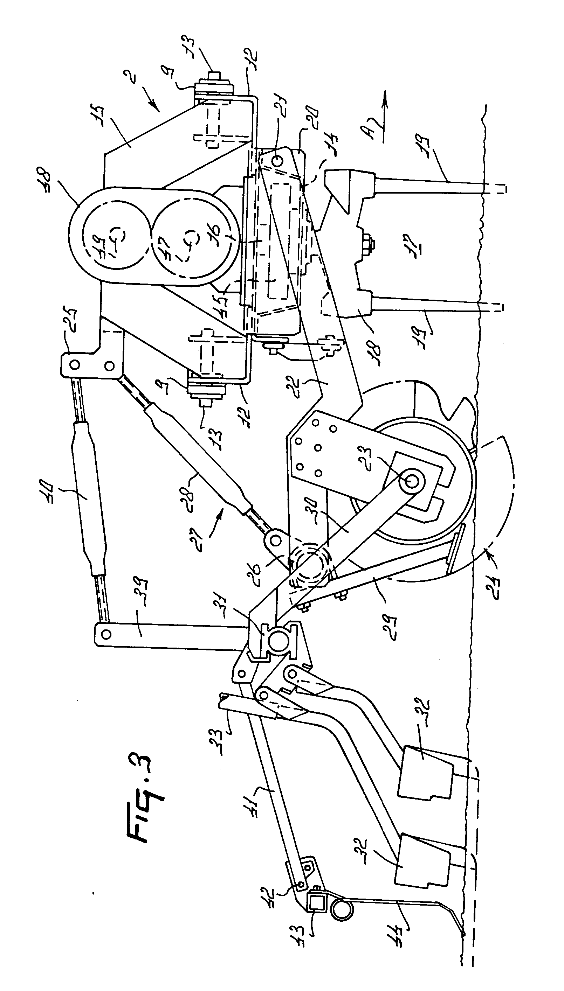

Figure 3 is, to an enlarged scale, a view taken in the direction of the arrow III in Figure 2; and
Figure 4 is, to an enlarged scale, a view taken on the line IV-IV in Figure 2.

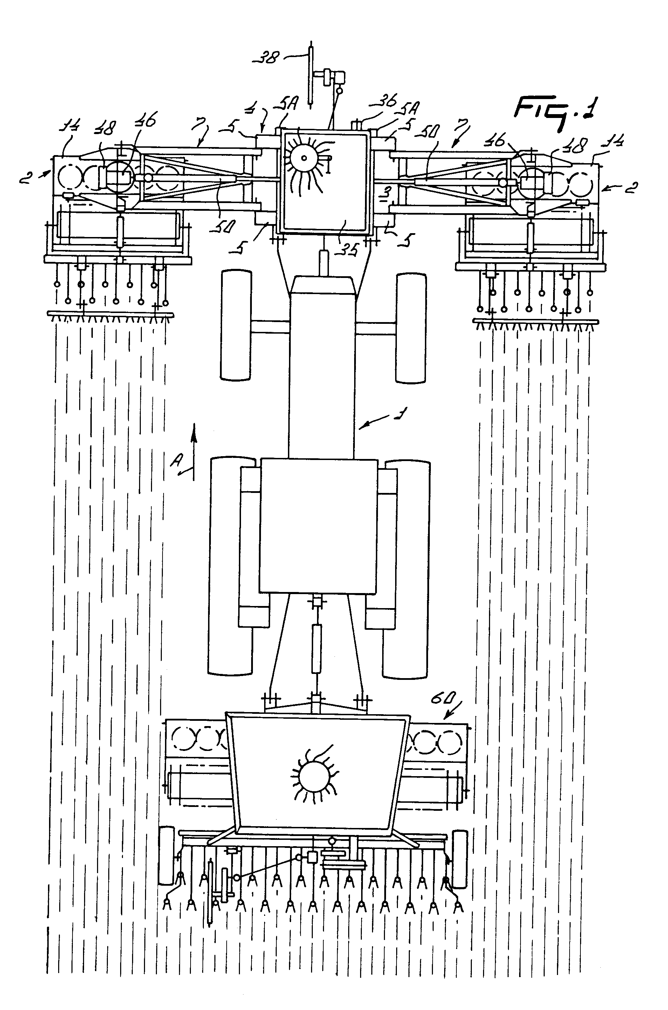

The construction according to the invention as shown in the drawings comprises a tractor 1 and two soil cultivating units 2 arranged on either side at the front of the tractor. The two units 2, which during operation cultivate a strip of soil beside the tractor, are attached to a frame 3 which is connected to the three-point lifting hitch at the front side of the tractor 1 by means of a trestle 3A comprising a three-point connection. The frame 3 has a central portion 4, at which the trestle 3A is arranged. The central portion 4 comprises two transverse beams 5 which extend at least substantially parallel to each other and at least substantially horizontally. The beams 5 are interconnected by means of cross beams 5A which extend in the direction of operative travel A. The ends of the beams 5 are provided with pivotal parts 7 by means of shafts 6 which extend in the direction of operative travel A and are in alignment. Each part 7 includes a beam 8 which extends in the direction of operative travel A and, in the region of the shafts 6, interconnects two parallel beams 9 extending parallel to the beams 5. Near its midway point, each beam 8 is fitted with two diverging supports 10 whose other ends are located near the ends of a cross beam 11 which extends parallel to the beam 8 and is arranged between the beams 9. The ends of the beams 9 of each part 7 constitute the legs of a fork, between which there is arranged pivotably by means of supports 12 and shafts 13 a box-like frame portion 14, the said shafts 13 being in alignment and extending in the direction of operative travel. The frame portion 14 extends at least substantially parallel to the beams 9 of a part 7 and constitutes part of the soil cultivating-seed drill unit 2. The shafts 13 are fastened near the lower end of a bracket 15 which is fitted on a frame portion 14 near the midway point thereof. Inside the frame portion 14 there are supported at equal interspaces of preferably 25 cms the upwardly directed, preferably vertical, shafts 16 of soil working members 17. At the ends of a shaft 16 projecting from the bottom side of the frame portion 14, each of the soil working members 17 includes a carrier 18, said carrier having near its ends downwardly extending soil working elements 19 in the form of tines. The ends of each frame portion 14 are closed by means of plates 20 which extend upwardly and at least substantially parallel to the direction of operative travel A in a vertical plane. Near their leading sides, the plates 20 are provided with a pin 21, the arrangement being such that the pins 21 are in alignment. About each of the pins 21 there is arranged an arm 22 which extends rearwardly along a plate 20. Between the ends of the arms 22 there is supported freely rotatably about shafts 23 a roller 24. Near the midway point of the frame portion 14 there is arranged between a support 25 on the bracket 15 and a cross beam 26 interconnecting the arms 22 an adjusting device 27, which device in this embodiment is constituted by a length-adjustable rod 28. With the aid of the rod 28 the arms 22 can be moved in the upward and downward direction by pivoting about the shafts 21 and be locked in a plurality of positions, the arrangement being such that this allows of a change in the position of the roller 24 relative to the soil working members and hence of an adjustment of the working depth of the soil working members. In this embodiment, the rollers 24 are packer rollers provided at their rear sides with scrapers 29 which are connected to the cross beam 26 and extend to between the crowns of cams. By means of arms 30 which are arranged pivotably about the shafts 23 of the roller 24 there is fitted behind the cross beam 26 a carrier 31, whereon seed coulters 32 are supported pivotably. Via tubes 33 the seed coulters 32 are connected to a distributor mechanism 34 of a common seed drill that with its hopper 35 is positioned on the central frame portion 4 of the frame 3. The frame portion 4 also carries a fan 36 which can be driven via a drive to be described hereinafter from the power take-off shaft at the front side of the tractor, as well as a feeding mechanism 37, with the aid of which seed material can be fed by the fan 36 from the hopper 35 to the distributor 34 which is positioned on the upper side of the hopper 35 and to which the tubes 33 are connected. The feeding mechanism 37 is driven by a step wheel 38 which is, during operation, moved over the soil during operation and is located at the front side. On the upper side of each carrier 31 there is arranged near its midway point a support 39 which is connected to the support 25 on the bracket 15 via a length-adjustable rod 40, the arrangement being such that, when the roller 24 is adjusted, the proper position of the seed coulters 32 can be set again. At some distance from its ends, each carrier 31 is provided with a rearwardly extending pivotal arm 41. Between the ends of the arms 41 there is arranged pivotably by means of transverse pins 42 a carrier 43 carrying downwardly directed resilient tines 44. The tines 44 cover the furrows made by the seed coulters 32. Inside each frame portion 14 of a unit, the shafts 16 of the soil working members 17 are fitted with a pinion 45, the arrangement being such that the pinions 45 on the shafts 16 of adjacent soil working members 17 are in driving connection with each other. Near the centre of the row of soil working members 17, the shaft 16 of a soil working member is extended upwardly and reaches to into a gear box 46. Inside the gear box 46, the extended portion is in driving connection via a bevel gear transmission with a shaft 47 which extends transversely to the direction of operative travel A and is supported in the gear box, the said shaft being in driving connection via a speed variator 48 located at the outside of the gear box 46 with a superjacent shaft 49 projecting from the gear box at the inner side thereof. The projecting end of a shaft 49 is connected via a telescopic shaft 50 to a transverse shaft 50A in a gear box 51 fitted on the central frame portion 4 by means of a support 52. The shaft 50A is connected via a bevel gear transmission to a shaft drive 53 which extends in the direction of operative travel A, and projects from the gear box 51 at the rearside. The shaft 50A projects from the outer side of the gear box 51 and carries a pulley 54, a belt 55 being provided to drive the fan 36. The rear end of the shaft 53 is connected via an intermediate shaft 56 to the power-take off shaft at the front side of the tractor 1. The spacing between the strips of soil to be cultivated by the soil cultivating units 2 on either side of the tractor 1 is such that it corresponds to the customary working width of a soil cultivating unit combined with a seed drill, which combination 60 can be hitched to the rear side of the tractor by means of the three-point lifting hitch (see Figure 1).

The machine in accordance with the invention as described in the foregoing operates as follows.

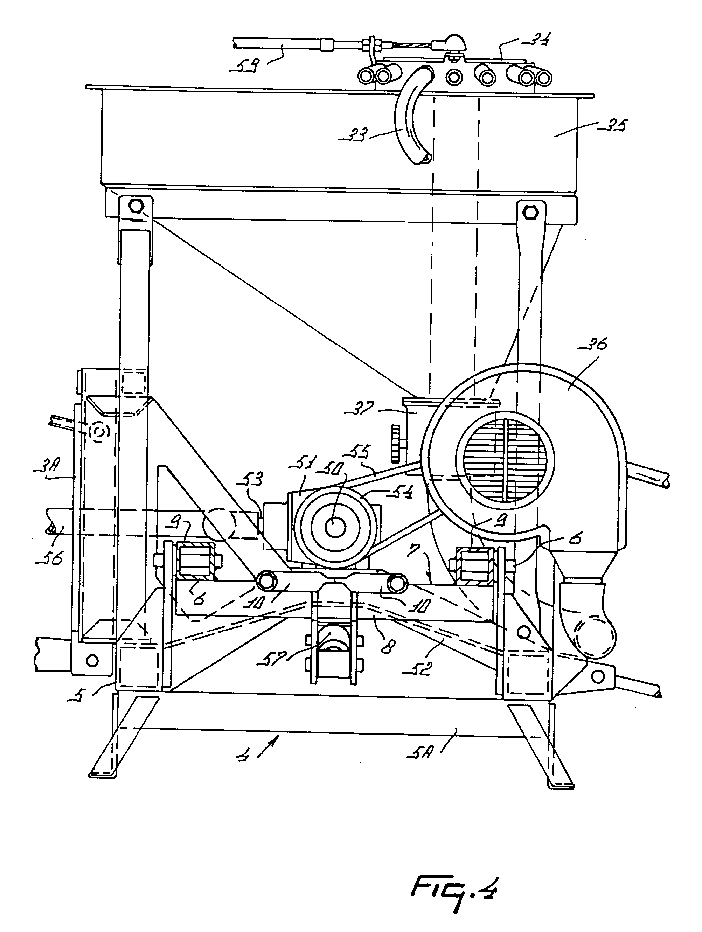

During operation, the entire assembly can be moved in a direction indicated by arrow A, the drive for the soil cultivating machines, which, in this embodiment, are rotary harrows, and the drive for the fan 36 of the seed drill on the central frame portion 4 being derived from the front side drive of the tractor 1. During travel, the soil is worked to a predetermined depth by means of the soil cultivating machines of the units 2 and seed material can be introduced directly into this worked soil via the seed shares 32. The strip of soil between the units 2 can be worked and sown by means of the soil cultivating-seed drill combination 60 hitched to the rear side of and driven from the tractor without the tractor traveling over the worked soil. Using the combination described in the foregoing, it is possible to work and sow the soil over a large width, which in this embodiment is approximately 6 metres, without the negative effect of tractor tracks. Due to the presence of the units 2 at the front side, it is possible to obtain a very uniform weight distribution which significantly increases the stability, in particular during transport. In order to be adjusted to the transport position, the soil cultivating-seed drill units 2 can be hinged upwardly about the shafts 6 by means of a hydraulic adjusting cylinder 57 (Fig. 4) which is arranged between the central frame portion 4 and a frame part 7 and is connected to the hydraulic circuit of the tractor. The lifting hitches at the front and rear sides of the tractor 1 ensure that the respective units are adjusted to the ultimate transport position.

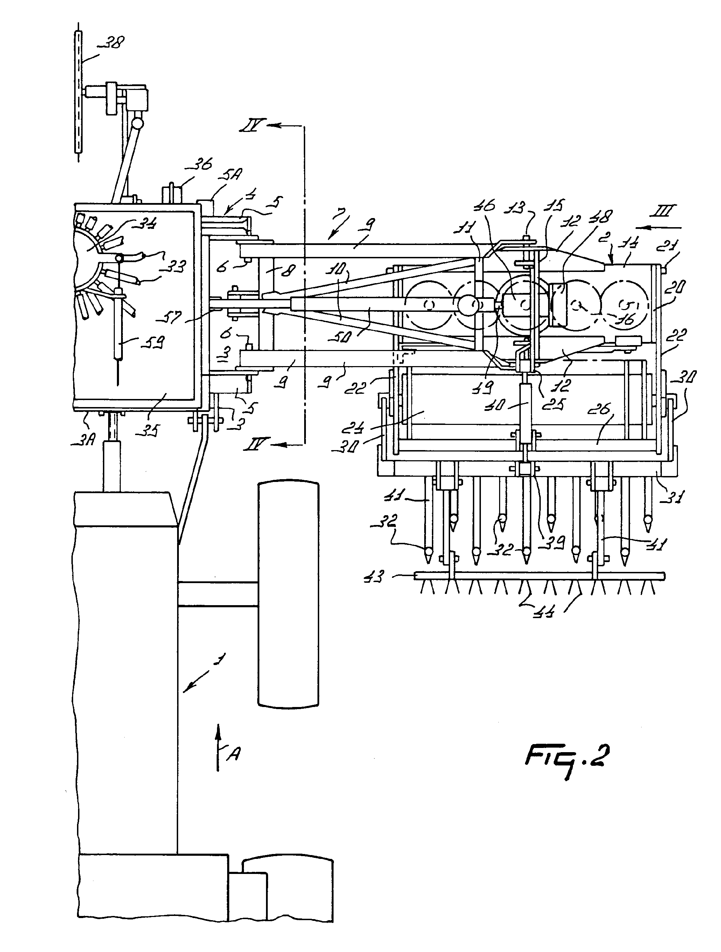

In an arrangement as shown in Figures 2 and 4, by means of a sliding part of the distributor mechanism 34, the side intended for feeding the seed to the lifted unit 2 can be closed by a Bowden cable 59 to be operated from the tractor 1, so that the seed will be transported to the seed coulters mounted to the cultivating unit that will be in operation.

The machine according to the invention could be used as a tillage machine with or without a seed drill. The seed drill could be in operation with or without the tillage unit being in operation. The left hand unit of the machine could be in operation independently of the unit at the right hand side. The unit of the right hand side could be in operation independently of the unit of the left hand side.

## Claims

1. A combination of a soil cultivating machine and a drill (33 to 37), which combination comprises a frame (3) and two soil cultivating units (2), whereby the frame (3) is mainly disposed between the said two soil cultivating units (2) and is provided with connecting means (3A) for connecting the frame with the said two soil cultivating units (2) to a lifting device at the front side of a tractor (1), the combination further comprises a third soil cultivating unit provided with means for mounting this unit to the rear lifting device of the tractor (1), characterized in that each soil cultivating unit comprises a power driven tillage machine, such as a rotary harrow, and in that a first seed drill (33 to 37) is provided at the front side of the tractor, which seed drill is common for the said two cultivating units (2), and a second seed drill at the rear side of the tractor, which second seed drill is combined with the third soil cultivating unit.

2. A combination as claimed in claim 1, characterized in that the first seed drill (33 to 35) is located in front of the tractor (1) and is arranged on the frame (3)which also supports the said two soil cultivating units (2).

3. A combination as claimed in claim 2, characterized in that the frame (3) has a central portion (4) supporting the first seed drill (33 to 37), whilst pivotal side portions (7) are provided to support the said two soil cultivating units (2).

4. A combination as claimed in any one of the preceding claims, characterized in that seed coulters (32) located behind each one of said two soil cultivating units (2) are connected to a distributor mechanism (34) of the first seed drill (33 to 37) via tubes (33).

5. A combination as claimed in claim 4, characterized in that the seed coulters (32) are supported by carriers (31), each of which is pivotal about a respective shaft (23) of a roller (24) which supports the soil cultivating machine of the relevant one of said two soil cultivating units (2).

6. A combination as claimed in any one of the preceding claims, characterized in that each of the said two soil cultivating units (2) is pivotal about an axis which extends in the direction of operative travel (A).

7. A combination as claimed in any one of the preceding claims, characterized in that the frame (3) for the said two soil cultivating units (2) is connected to the three-point lifting hitch at the front side of a tractor (1).

8. A combination as claimed in any one of the preceding claims, characterized in that the soil cultivating-seed drill unit (60) at the rear side of the tractor (1) has a working width equal to the width of the strip present between the said two soil cultivating units (2) located at the front side of the tractor (1).

9. A combination as claimed in any one of the preceding claims, characterized in that the first seed drill (33 to 35) for the said two soil cultivating units (2) is a pneumatic one, which at option can transport the seed to the left hand side or to the right hand side of the machine.

10. A combination as claimed in any one of the preceding claims, characterized in that the drive for the first seed drill (33 to 37) and that for the said two soil cultivating units (2) is obtained from a central gear wheel transmission which is drivable from the power take-off shaft at the front side of the tractor (1).

11. A combination as claimed in any one of the preceding claims, characterized in that the feeding mechanism (37) of the first seed drill (33 to 37) is driven by a step wheel (38) located in front of the machine.

## Patentansprüche

1. Gerätekombination aus einer Bodenbearbeitungs- und einer Drillmaschine (33 bis 37) mit einem Gestell (3) und zwei Bodenbearbeitungs-Einheiten (2), wobei das Gestell (3) hauptsächlich zwischen den beiden Bodenbearbeitungs-Einheiten (2) angeordnet und mit Anschlußvorrichtungen (3A) zum Anschluß des Gestells mit den beiden Bodenbearbeitungs-Einheiten (2) an eine frontseitige Hebevorrichtung eines Schleppers (1) versehen ist, und mit einer dritten Bodenbearbeitungs-Einheit, die mit Vorrichtungen zum Anschluß dieser Einheit an die heckseitige Hebevorrichtung des Schleppers (1) versehen ist,
dadurch gekennzeichnet, daß jede Bodenbearbeitungs-Einheit eine motorisch angetriebene Bodenbearbeitungsmaschine, wie beispielsweise eine Kreiselegge, aufweist, daß an der Frontseite des Schleppers eine erste Drillsaatmaschine (33 bis 37) angeordnet ist, die den beiden Bodenbearbeitungs-Einheiten (2) gemeinsam zugeordnet ist, und daß an der Heckseite des Schleppers eine zweite Drillsaatmaschine vorgesehen ist, die mit der dritten Bodenbearbeitungs-Einheit kombiniert ist.

2. Gerätekombination nach Anspruch 1,
dadurch gekennzeichnet, daß die erste Drillsaatmaschine (33 bis 35) an der Frontseite des Schleppers (1) und auf dem Gestell (3) angeordnet ist, das auch die beiden Bodenbearbeitungs-Einheiten (2) trägt.

3. Gerätekombination nach Anspruch 2,
dadurch gekennzeichnet, daß das Gestell (3) einen zentralen Teil (4) aufweist, der die erste Drillsaatmaschine (33 bis 37) trägt, und daß schwenkbare Seitenteile (7) zum Abstützen der beiden Bodenbearbeitungs-Einheiten (2) vorgesehen sind.

4. Gerätekombination nach einem der vorhergehenden Ansprüche,
dadurch gekennzeichnet, daß hinter jeder der beiden Bodenbearbeitungs-Einheiten (2) angeordnete Säschare (32) mit einem Verteilermechanismus (34) der ersten Drillsaatmaschine (33 bis 37) über Rohre (33) verbunden sind.

5. Gerätekombination nach Anspruch 4,
dadurch gekennzeichnet, daß die Säschare (32) von Trägern (31) abgestützt sind, von denen jeder um die jeweilige Achse (23) einer Walze (24) schwenkbar ist, welche die Bodenbearbeitungsmaschine der zugehörigen Bodenbearbeitungs-Einheit (2) abstützt.

6. Gerätekombination nach einem der vorhergehenden Ansprüche,
dadurch gekennzeichnet, daß jede der beiden Bodenbearbeitungs-Einheiten (2) um eine Achse schwenkbar ist, die sich in Arbeitsrichtung (A) erstreckt.

7. Gerätekombination nach einem der vorhergehenden Ansprüche,
dadurch gekennzeichnet, daß das Gestell (3) für die beiden Bodenbearbeitungs-Einheiten (2) an die frontseitige Dreipunkt-Hebevorrichtung eines Schleppers (1) angeschlossen ist.

8. Gerätekombination nach einem der vorhergehenden Ansprüche,
dadurch gekennzeichnet, daß die Bodenbearbeitungs-Drillsaat-Einheit (60) an der Heckseite des Schleppers (1) eine Arbeitsbreite hat, die gleich der Breite des Streifens zwischen den beiden an der Frontseite des Schleppers (1) befindlichen Bödenbearbeitungs-Einheiten (2) ist.

9. Gerätekombination nach einem der vorhergehenden Ansprüche,
dadurch gekennzeichnet, daß die erste Drillsaatmaschine (33 bis 35) für die beiden Bodenbearbeitungs-Einheiten (2) eine pneumatische Maschine ist, die das Saatgut wahlweise auf die linke Seite oder auf die rechte Seite der Maschine befördern kann.

10. Gerätekombination nach einem der vorhergehenden Ansprüche,
dadurch gekennzeichnet, daß der Antrieb der ersten Drillsaatmaschine (33 bis 37) und der beiden Bodenbearbeitungs-Einheiten (2) durch ein zentrales Zahnrad-Übersetzungsgetriebe erfolgt, das durch die frontseitige Zapfwelle des Schleppers (1) antreibbar ist.

11. Gerätekombination nach einem der vorhergehenden Ansprüche,
dadurch gekennzeichnet, daß der Fördermechanismus (37) der ersten Drillsaatmaschine (33 bis 37) durch ein an der Vorderseite der Maschine angeordnetes Schaltrad (38) angetrieben wird.

## Revendications

1. Combinaison d'une machine pour cultiver le sol et d'un semoir (33 à 37), laquelle combinaison comprend un châssis (3) et deux unités (2) pour cultiver le sol, dans laquelle le châssis (3) est principalement disposé entre lesdites deux unités (2) cultivant le sol et est muni de moyens de liaison (3A) pour relier le châssis aves lesdites deux unités (2) cultivant le sol à un dispositif de levage sur le côté antérieur d'un tracteur (1), la combinaison comprend en outre une troisième unité cultivant le sol, munie de moyens pour monter cette unité sur le dispositif de levage situé à l'arrière du tracteur (1),
**caractérisée** en ce que chaque unité cultivant le sol comprend une machine de labour motorisée, telle qu' une herse rotative, et en ce qu'un premier semoir (33 à 37) est prévu sur l'avant du tracteur, lequel semoir est commun pour lesdites deux unités (2) cultivant le sol, et un deuxième semoir à l'arrière du tracteur, lequel deuxième semoir est combiné avec la troisième unité cultivant le sol.

2. Combinaison selon la revendication 1, caractérisée en ce que le premier semoir (33 à 35) est situé en avant du tracteur (1) et est disposé sur le châssis (3) qui supporte aussi lesdites deux unités (2) cultivant le sol.

3. Combinaison selon la revendication 2, caractérisée en ce que le châssis (3) a une partie centrale (4) supportant le premier semoir (33 à 37), tandis que des parties latérales pivotantes (7) sont prévues pour supporter lesdites deux unités (2) cultivant le sol.

4. Combinaison selon l'une quelconque des revendications précédentes, caractérisée en ce que des coutres à semence (32) situés derrière chacune desdites deux unités (2) cultivant le sol sont reliés à un mécanisme distributeur (34) du premier semoir (33 à 37) par des tubes (33).

5. Combinaison selon la revendication 4, caractérisée en ce que les coutres à semence (32) sont supportés par des supports (31), chacun desquels est pivotant autour d'un arbre respectif (23) d'un rouleau (24) qui supporte la machine cultivant le sol de celle desdites deux unités (2) cultivant le sol qui est concernée.

6. Combinaison selon l'une quelconque des revendications précédentes, caractérisée en ce que chacune desdites deux unités (2) cultivant le sol est pivotante autour d'un axe qui s'étend dans le sens de marche de travail (A).

7. Combinaison selon l'une quelconque des revendications précédentes, caractérisée en ce que le châssis (3) pour lesdites deux unités (2) cultivant le sol est relié au dispositif d'attelage/levage à trois points à l'avant d'un tracteur (1).

8. Combinaison selon l'une quelconque des revendications précédentes, caractérisée en ce que l'unité (60) cultivant le sol, combinée à un semoir, située à l'arrière du tracteur (1) a une largeur de travail égale à la largeur de la bande de terrain présente entre lesdites deux unités (2) cultivant le sol, situées à l'avant du tracteur (1).

9. Combinaison selon l'une quelconque des revendications précédentes, caractérisée en ce que le premier semoir (33 à 35) pour lesdites deux unités (2) cultivant le sol est un semoir pneumatique qui peut, au choix, transporter la semence vers le côté gauche ou vers le côté droit de la machine.

10. Combinaison selon l'une quelconque des revendications précédentes, caractérisée en ce que l'entraînement du premier semoir (33 à 37) et celui desdites deux unités (2) cultivant le sol est obtenu à partir d'une transmission centrale à engrenages pouvant être entraînée à partir de l'arbre de prise de force situé sur l'avant du tracteur (1).

11. Combinaison selon l'une quelconque des revendications précédentes, caractérisée en ce que le mécansime d'alimentation (37) du premier semoir (33 à 37) est entraîné par une roue crantée (38) située à l'avant de la machine.
